# EUROPÄISCHE PATENTSCHRIFT

(11) **EP 2 911 555 B1**
(45) Veröffentlichungstag und Bekanntmachung des Hinweises auf die Patenterteilung: **08.06.2016**
(21) Anmeldenummer: 12784453.8
(22) Anmeldetag: 25.10.2012
(51) Int. Cl.: A47B 21/06

(54) **MÖBELZUBEHÖR IN FORM EINES KABELKORBS**
FURNITURE ACCESSORY IN THE FORM OF A CABLE BASKET
ACCESSOIRE POUR MEUBLES SOUS FORME D'UN PANIER À CÂBLES

(43) Veröffentlichungstag der Anmeldung: 02.09.2015
(73) Patentinhaber: Steelcase Inc., Grand Rapids, Michigan 49508 (US)
(72) Erfinder: RUTZ, Josef, 83022 Rosenheim (DE)
(74) Vertreter: Andrae | Westendorp Patentanwälte Partnerschaft
(86) Internationale Anmeldenummer: PCT/EP2012/004469
(87) Internationale Veröffentlichungsnummer: WO 2014/063717

(56) Entgegenhaltungen:
- EP-A1- 1 864 591
- DE-A1- 19 728 284
- DE-U1- 9 313 748
- DE-U1-202009 012 275
- DE-U1-202011 104 139
- US-A- 5 971 509

## Beschreibung

Die vorliegende Erfindung betrifft ein Möbelzubehör gemäß dem Oberbegriff von Anspruch 1.

Bei Möbeln in Form eines Tisches oder in Form eines Hängeschrankes werden Elektrokabel und Elektrosteckdosenleisten vorzugsweise unterhalb einer Tischplatte oder einer Bodenplatte des Hängeschrankes positioniert und dort von einem Kabelkorb gehalten, damit die Elektrokabel und Steckdosenleisten nicht auf dem Böden liegen, wo diese eine Stolpergefahr bilden würden und darüber hinaus aus ästhetischen Gesichtpunkten unvorteilhaft sind.

Bei herkömmlichen aus dem Stand der Technik bekannten Tischen, insbesondere Schreibtischen, sind unterhalb der Tischplatte montierte Kabelkörbe vorgesehen. Diese Kabelkörbe sind starr, das heißt nicht kippbar und winkelunveränderlich unterhalb der Tischplatte befestigt, so dass deren Aufnahmeraum stets zugänglich ist. Nachteilig bei diesen Kabelkörben ist jedoch, dass der Aufnahmeraum oder das Stauvolumen nicht verschlossen werden kann, so dass dort verstaute Kabel oder Steckdosenleisten relativ einfach aus diesen herausfallen können. Darüber hinaus sind die im Aufnahmeraum verstauten Kabel und Steckerleisten von außen sichtbar, was unter ästhetischen Gesichtpunkten unvorteilhaft ist.

Die DE 41 03 708 A1 offenbart einen Kabelkanal zum Aufnehmen von Kabeln. Der Kabelkanal umfasst zwei einen Winkel von etwa 90° einschließende Seitenwände, an deren jeweiligen Endbereichen jeweils ein Halteelement in Form einer mit einem Hinterschnitt versehenen Haltenut vorgesehen ist. Die zwei Seitenwände bilden eine Halterung, die beispielsweise im Eckbereich eines Raumes mit zwei wänden oder im Eckbereich eines Tisches mit einer Tischplatte und mit einer Rückwand des Tisches verbunden werden kann. Der Kabelkanal umfasst ferner einen Deckel, an dessen Endbereichen jeweils Befestigungselemente in Form einer im Querschnitt kreisförmigen Verdickung angeordnet sind. Die Befestigungselemente des Deckels können über Einführöffnungen in die Haltenuten hinein gedrückt werden, so dass ein Aufnahmeraum des Kabelkanals versschließbar ist. Der Aufnahmeraum ist dadurch zugänglich, dass ein Befestigungselement aus einem Halteelement herausgezogen wird, wobei sich dabei das Halteelement zumindest temporär verformt. In diesem Zustand ist der Deckel um eine durch das andere Halteelement definierte Schwenkachse bezüglich der Halterung verschwenkbar. Somit ist der Kabelkanal zu zwei Seiten hin aufklappbar und kann von zwei Seiten her beladen werden.

Nachteilig bei diesem Kabelkanal ist jedoch, dass zum Verbinden der Befestigungselemente mit den Haltelementen und zum Trennen dieser die Halteelemente zumindest temporär verformt werden müssen, so dass es bei den Halteelementen unweigerlich zu einer Materialermüdung kommt und die Halteelemente beschädigt werden können. Darüber hinaus gestaltet sich das Öffnen und Schließen des Kabelkanals als sehr unkomfortabel, da die Rastung zwischen den Halteelementen und Befestigungselementen mit relativ großer Kraft gelöst oder hergestellt werden muss.

Ein weiterer gattungsgemäßer Kabelkanal wird in der DE 20 2009 012275 U1 offenbart. Der Erfindung liegt die Aufgabe zugrunde, ein verbessertes und zuverlässigeres Möbelzubehör der eingangs genannten Art zu schaffen, bei dem das Öffnen und Schließen komfortabel und beliebig oft möglich ist, ohne dass die Halteelemente und Befestigungselemente beschädigt werden.

Diese Aufgabe wird durch ein Möbelzubehör mit den Merkmalen des Anspruchs 1 gelöst. Vorteilhafte Ausgestattungen sind in den Unteransprüchen beschrieben.

Das erfindungsgemäße Möbelzubehör umfasst einen an der Halterung verschiebbar gelagerten Schieber zum Verriegeln des ersten Befestigungselements in/an dem ersten Halteelement und des zweiten Befestigungselements in/an dem zweiten Halteelement. Das erste und das zweite Halteelement können beispielsweise als eine Haltenut oder als ein Haltestift oder als eine Haltewulst ausgebildet sein. Das erste und das zweite Befestigungselement können insbesondere als Befestigungsstifte oder alternativ als Befestigungsnuten ausgebildet sein. In einer verriegelungsstellung verriegelt der Schieber das erste Befestigungselement in/an dem ersten Halteelement und das zweite Befestigungselement in/an dem zweiten Halteelement. In der Verriegelungsstellung ist daher ein das erste Befestigungselement und das zweite Befestigungselement umfassender Korb fest und winkelunveränderlich mit der Halterung verbunden. Denn weder das erste Befestigungselement noch das zweite Befestigungselement lässt sich aus den entsprechenden ersten und zweiten Halteelementen lösen. In einer ersten Freigabestellung verriegelt der Schieber das zweite Befestigungselement in/an dem zweiten Halteelement, wobei das erste Halteelement entriegelt ist, so dass das erste Befestigungselement von/aus dem ersten Halteelement lösbar ist und der Korb um die zweite Schwenkachse verschwenkbar ist. Der Korb ist bei entsprechender Montage an einem Tisch dann zur Vorderseite des Tisches hin aufklappbar. In einer zweiten Freigabestellung verriegelt der Schieber das erste Befestigungselement in/an dem ersten Halteelement, wobei das zweite Halteelement entriegelt ist, so dass das zweite Befestigungselement von/aus dem zweiten Halteelement lösbar ist und der Korb um die erste Schwenkachse verschwenkbar ist. Bei einer entsprechenden Montage des Möbelzubehörs an einem Tisch ist der Korb dann zur Rückseite des Tisches nach hinten hin aufklappbar. Der Schieber 30 ist dabei aus der Verriegelungsstellung in die erste Freigabestellung durch Verschieben in eine erste Richtung überführbar. Die erste Richtung ist dabei die Richtung in Richtung des zweiten Halteelements. Der Schieber ist weiterhin aus der Verriegelungsstellung in die zweite Freigabestellung durch Verschieben in eine zweite Richtung, die zu der ersten Richtung entgegengesetzt ist, überführbar. Die zweite Richtung ist dabei die Richtung in Richtung des ersten Halteelements.

Bei dem oben beschriebenen Korb kann es sich um einen Kabelkorb handeln. Wenn die ersten und zweiten Halteelemente als Haltenuten ausgebildet sind, dann weisen diese Aufnahmeöffnungen auf bzw. sind als Aufnahmeöffnungen ausgestaltet. Diese sind auch als Aufnahmenut zu bezeichnen. Wenn die ersten und zweiten Befestigungselemente als Befestigungsstifte ausgebildet sind, dann können diese U-förmig ausgebildete oder L-förmig ausgebildete Befestigungseinrichtungen sein, die jeweils mit dem Korb verbunden sind. Da der Schieber sowohl zum Verriegeln als auch zum Entriegeln der Befestigungselemente in/an den Halteelementen dient, kann der Schieber auch als Verriegelungs/Entriegelungseinrichtung bezeichnet werden.

Durch die Bereitstellung des in die erste Richtung und in die zweite Richtung verschiebbar gelagerten Schiebers kann somit selektiv eine Verriegelung entweder des ersten Befestigungselements mit dem ersten Halteelement und/oder eine Verriegelung des zweiten Befestigungselements in/an dem ersten Halteelement erreicht werden, so dass der Korb zu zwei Seiten der Halterung hin aufklappbar ist. Zum Aufklappen bzw. Zuklappen des Korbs müssen die Halteelemente bzw. die Befestigungselemente nicht verformt werden, so dass diese keinem Verschleiß oder einem sehr viel verminderten Verschleiß unterliegen. Weiterhin gestaltet sich das Aufklappen bzw. Zuklappen des Korbes hin zur Frontseite oder hin zur Rückseite als sehr komfortabel, da lediglich der Schieber in die entsprechende Richtung verschoben werden muss, um eine der Befestigungselemente zu entriegeln. Zum Verschieben des Schiebers ist lediglich nur ein kleiner Kraftaufwand notwendig. Da der Korb zur Frontseite als auch zur Rückseite hin aufklappbar ist, kann in Abhängigkeit von den gegebenen Verhältnissen der Korb beispielsweise mit Kabeln oder mit Steckdosenleisten oder mit anderem Zubehör befüllt werden.

Vorzugsweise umfasst das Möbelzubehör zwei Kraftspeichereinrichtungen, die jeweils zwischen dem Schieber und der Halterung angeordnet sind. Dabei ist eine erste Kraftspeichereinrichtung dazu ausgebildet, den Schieber in die zweite Richtung mit einer Kraft zu beaufschlagen. Eine zweite Kraftspeichereinrichtung ist dazu ausgebildet, den Schieber in die erste Richtung mit einer Kraft zu beaufschlagen. In der Verriegelungsstellung des Schiebers gleicht sich die von der ersten Kraftspeichereinrichtung auf den Schieber ausgeübte Kraft mit der von der zweiten Kraftspeichereinrichtung auf den Schieber ausgeübte Kraft aus, so dass ohne eine externe Krafteinwirkung der Schieber in der Verriegelungsstellung verbleibt. Folglich ist es auch möglich, dass in der Verriegelungsstellung weder die erste Kraftspeichereinrichtung noch die zweite Kraftspeichereinrichtung auf den Schieber eine Kraft ausübt. In der ersten Freigabestellung übt die erste Kraftspeichereinrichtung auf den Schieber eine größere Kraft aus als die zweite Kraftspeichereinrichtung, so dass der Schieber ohne externe Krafteinwirkung in die Verriegelungsstellung überführt wird. Andererseits übt die zweite Kraftspeichereinrichtung in der zweiten Freigabestellung auf den Schieber eine größere Kraft aus als die erste Kraftspeichereinrichtung, so dass der Schieber ohne externe Krafteinwirkung in die Verriegelungsstellung überführt wird.

Durch Bereitstellen der ersten und zweiten Kraftspeichereinrichtungen wird der Schieber folglich ohne externe Krafteinwirkung stets in die Verriegelungsstellung überführt, so dass der Korb zuverlässig an der Halterung befestigbar ist. Die Kraftspeichereinrichtungen können vorzugsweise jeweils als Federeinrichtung ausgebildet sein und stützen sich jeweils an der Halterung und am Schieber ab. Vorzugsweise sind die Kraftspeichereinrichtungen mit dem Schieber verbunden.

Vorzugsweise sind das erste Halteelement und das zweite Halteelement jeweils als Haltenut in der Halterung ausgebildet und das erste Befestigungselement und das zweite Befestigungselement sind jeweils als mit dem Korb verbundene Befestigungsstifte ausgebildet. Der erste Befestigungsstift ist in der ersten Haltenut und der zweite Befestigungsstift ist in der zweite Haltenut aufnehmbar. Der Schieber umfasst einen ersten Verriegelungsarm und einen zweiten Verriegelungsarm, wobei in der Verriegelungsstellung der erste Verriegelungsarm den ersten Befestigungsstift in der ersten Haltenut und der zweite Verriegelungsarm den zweiten Befestigungsstift in der zweiten Haltehut verriegelt. In der ersten Freigabestellung verriegelt hingegen der zweite Verriegelungsarm den zweiten Befestigungsstift in der zweiten Haltenut, wobei der erste Verriegelungsarm den ersten Befestigungsstift nicht in der ersten Haltenut verriegelt, so dass der erste Befestigungsstift aus der ersten Haltenut entfernbar und der Korb um die zweite Schwenkachse verschwenkbar ist. In der zweiten Freigabestellung verriegelt hingegen der erste Verriegelungsarm den ersten Befestigungsstift in der ersten Haltenut, wobei der zweite Verriegelungsarm den zweiten Befestigungsstift nicht in der zweiten Haltenut verriegelt, so dass der zweite Befestigungsstift aus der zweiten Haltenut entfernbar und der Korb und die erste Schwenkachse verschwenkbar ist.

Bei einer entsprechenden Ausgestaltung der ersten und zweiten Halteelemente und der ersten und zweiten Befestigungselemente ist eine Verriegelung und eine Entriegelung der Befestigungselemente in den Halteelementen besonders einfach möglich.

Vorzugsweise weist der erste Verriegelungsarm eine einer Öffnung der ersten Haltenut zugewandte Seite auf, die derart abgeschrägt ist, dass durch Einführen des ersten Befestigungsstifts in die erste Haletnut der Schieber von der Verriegelungsstellung in Richtung der ersten Freigabestellung verschoben wird. Der zweite Verriegelungsarm weist vorzugsweise eine einer Öffnung der zweiten Haltenut zugewandte Seite auf, die derart abgeschrägt ist, dass durch Einführen des zweiten Befestigungsstifts in die zweite Haltenut der Schieber von der Verriegelungsstellung in Richtung der zweiten Freigabestellung verschoben wird.

Bei einer entsprechenden Ausgestaltung des Möbelzubehörs ist es nicht notwendig, den Schieber vor Einführen der Befestigungsstifte in die dafür vorgesehenen Haltenute zu verschieben, da durch Kraftbeaufschlagung des Schiebers mittels der Befestigungsstifte der Schieber automatisch in die notwendige Öffnungsstellung verschoben wird.

Vorzugsweise umfasst die Halterung eine Klemmeinrichtung, mittels der die Halterung an einer zwei Tischbeinstrukturen verbindende Verbindungsstrebe eines Tisches befestigbar ist. Dadurch kann das Möbelzubehör ohne Vorsehen von Befestigungslöchern beispielsweise in der Tischplatte an dem Tisch befestigt werden. Darüber hinaus ist das Möbelzubehör somit entlang der Axialerstreckung der Verbindungsstrebe des Tisches verschiebbar und kann an gewünschten Orten positioniert werden.

Natürlich ist es auch möglich, dass die Halterung mittels Schrauben an einer Tischplatte eins Tisches befestigt werden kann.

Die Erfindung wird nachfolgend anhand von Ausführungsbeispielen weiter erläutert. Dabei zeigen in Einzelnen:
- Figur 1a:: eine räumliche Darstellung eines erfindungsgemäßen Möbelzubehörs mit zwei Halterungen und einem Korb, der mittels zweier in den Halterungen angeordneten Schieber gehalten ist, wobei sich die Schieber in den Halterungen in einer Verriegelungsstellung befinden und den Korb in einer geschlossenen Position halten;
- Figur 1b:: eine Seitenansicht eines Querschnitts des in Figur 1a dargestellten Möbelzubehörs;
- Figur 2a:: eine räumliche Darstellung des Möbelzubehörs, wobei der Korb nach vorne hin aufgeklappt ist;
- Figur 2b:: eine Seitenansicht des in Figur 2a dargestellten Möbelzubehörs;
- Figur 3a:: eine räumliche Darstellung des erfindungsgemäßen Möbelzubehörs, wobei der Korb nach hinten hin aufgeklappt ist;
- Figur 3b:: eine seitliche Darstellung des in Figur 3a dargestellten Möbelzubehörs;
- Figur 4:: eine Seitenansicht einer im Querschnitt dargestellten Halterung samt Schieber und samt zwischen dem Schieber und der Halterung angeordneten Kraftspeichereinrichtungen;
- Figur 5:: eine Seitendarstellung des Schiebers samt Kraftspeichereinrichtungen;
- Figur 6:: eine räumliche Darstellung des erfindungsgemäßen Möbelzubehörs, das an der Unterseite einer Tischplatte befestigt ist und sich in einer nach hinten geöffneten Stellung befindet; und
- Figur 7:: eine räumliche Darstellung eines Möbels in Tischform mit einem erfindungsgemäßen Möbelzubehör.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt und eine wiederholende Beschreibung vermieden wird.

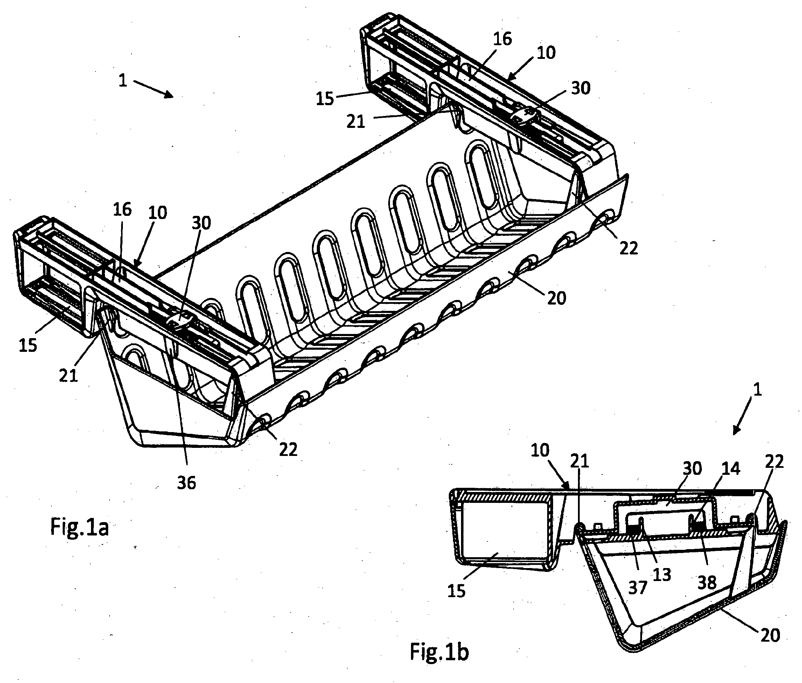

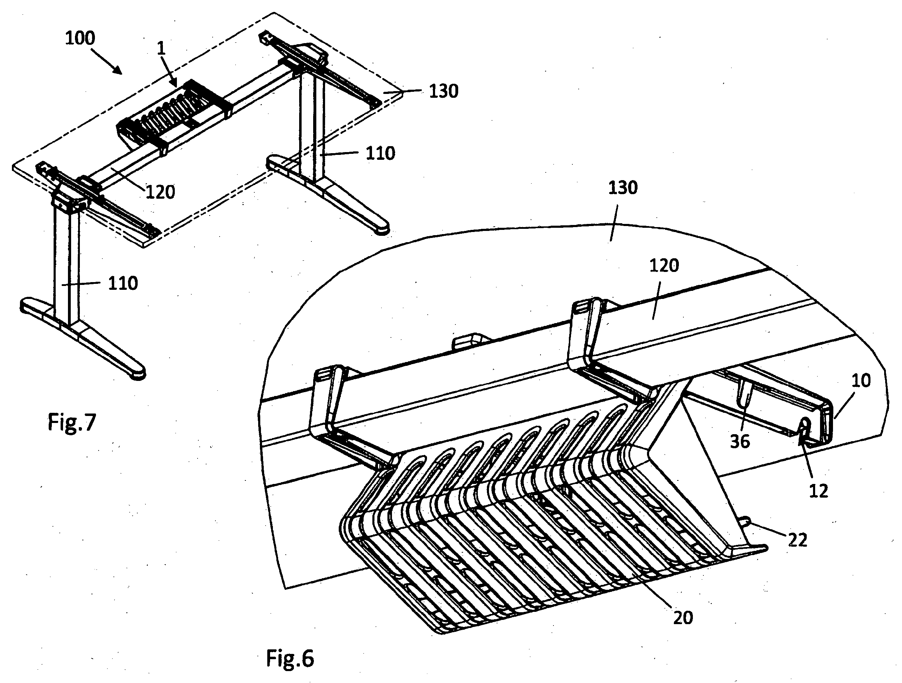

In den Figuren 1a und 1b ist ein erfindungsgemäßes Möbelzubehör 1 in Form eines Kabelkorbs in einem geschlossenen Zustand dargestellt. Das in den Figuren 1a und 1b dargestellte Möbelzubehör 1 ist beispielsweise an einem in Figur 7 dargestellten Möbel 100 in Form eines Tisches befestigbar. Der in Figur 7 dargestellte Tisch 100 umfasst zwei Tischbeinstrukturen 110, die mittels einer Verbindungsstrebe 120 miteinander verbunden sind. Eine Tischplatte 130 ist mit den Tischbeinstrukturen 110 verbunden.

Das Möbelzubehör 1 ist mittels später noch zu erläuternden Klemmeinrichtungen 15 an der Verbindungsstrebe 120 befestigt. Die in Figur 7 vorne dargestellte Längsseite des Tisches stellt die Vorderseite dar, und die der Vorderseite gegenüberliegende Seite stellt die Rückseite dar. Die vorliegende Erfindung ist jedoch nicht darauf beschränkt, dass das Möbelzubehör 1 an einem entsprechenden Tisch 100 befestigbar ist. Das Möbelzubehör 1 kann beispielsweise auch an einem Unterschrank befestigt werden, der beispielsweise unterhalb eines Tisches angeordnet sein kann und mit diesem verbunden sein kann.

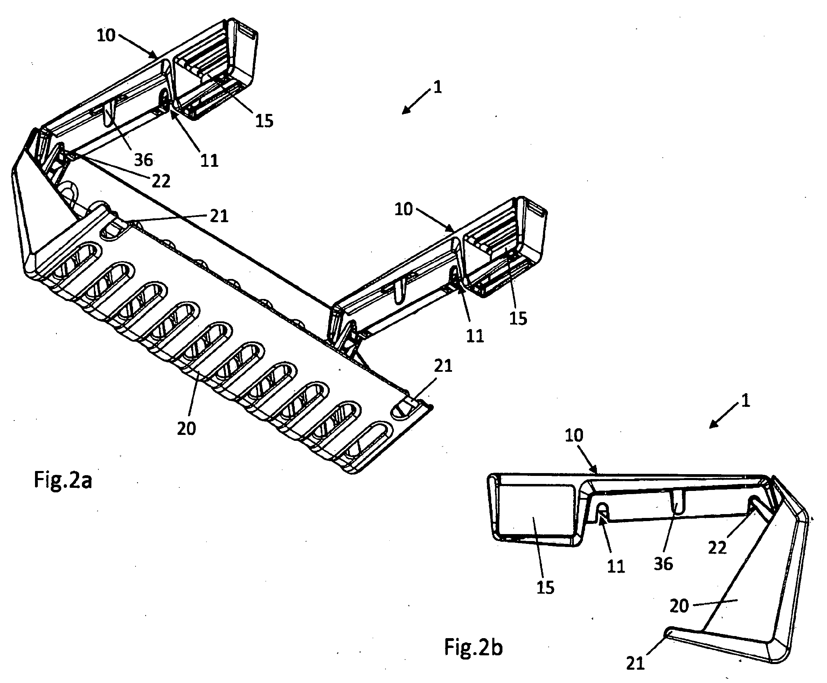

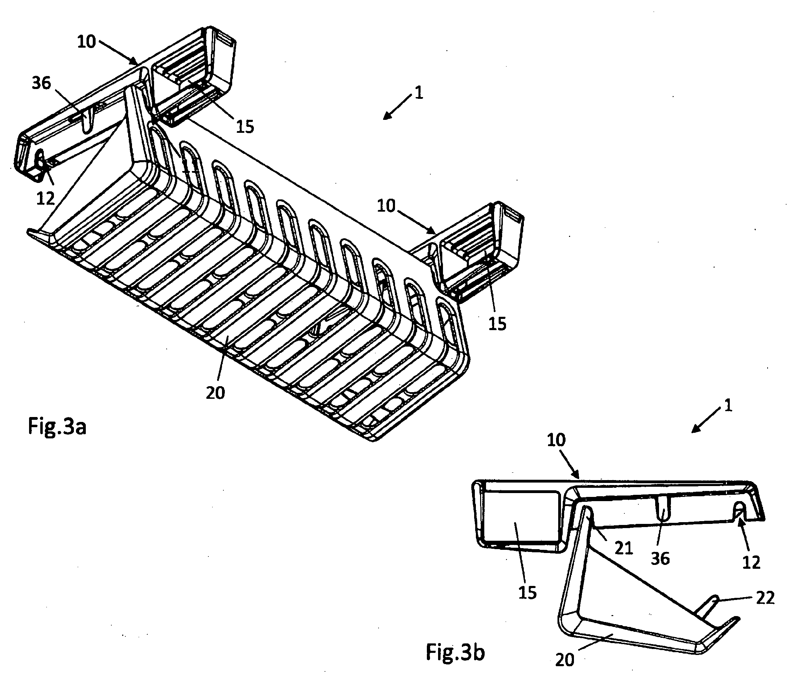

Das erfindungsgemäße Möbelzubehör 1 umfasst in der in den Figuren 1a bis 6 dargestellten Ausführungsform zwei Halterungen 10, die mittels der Klemmeinrichtungen 15 an der Verbindungsstrebe 120 eines Tisches 100 befestigbar sind. Die Halterungen 100 können alternativ aber auch mittels Schrauben oder anderer Befestigungsmittel an der Tischplatte 130 befestigt werden. Jede Halterung 10 umfasst ein erstes Halteelement 11 in Form einer ersten Haltenut und ein zweites Halteelement 12 in Form einer zweiten Haltenut. Die erste Haltenut ist in den Figuren 2a und 2b besser ersichtlich, wobei die zweite Haltenut in den Figuren 3a und 3b besser ersichtlich ist.

Das Möbelzubehör 1 umfasst ferner einen als Kabelkorb 20 ausgebildeten Korb 20, an dessen zwei seitlichen Endbereichen jeweils ein erstes Befestigungselement 21 und ein zweites Befestigungselement 22 angeordnet sind. Der Korb 20 umfasst somit zwei erste Befestigungselemente 21 und zwei zweite Befestigungselemente 22. Die ersten und die zweiten Befestigungselemente 21, 22 sind dabei jeweils als Befestigungsstifte 21, 22 ausgebildet, die in die entsprechenden ersten Haltenute 11 und zweiten Haltenute 12 der Halterungen 10 einführbar sind. Der Korb 20 weist einen Aufnahmeraum auf, in dem Kabel, Steckdosenleisten oder andere Einrichtungen aufgenommen werden können. In den Figuren 1a und 1b ist der Korb 20 in einer geschlossenen Stellung dargestellt, in der die ersten Befestigungsstifte 21 in den Haltenten 11 der Halterungen 10 und die zweiten Befestigungsstifte 22 in den zweiten Haltenuten 12 der Halterungen 10 eingeschoben sind. Die ersten Befestigungsstifte 21 und die zweiten Befestigungsstifte 22 sind mittels in den Halterungen 10 vorgesehenen Schieber 30 verriegelt.

Die Schieber 30 sind in Führungskanälen 16 der entsprechenden Halterungen 10 jeweils verschiebbar gelagert. Ein Schieber 30 ist zwischen einer Verriegelungsstellung, einer ersten Freigabestellung und einer zweiten Freigabestellung verschiebbar. In Figur 1b ist der Schieber 30 in der Verriegelungsstellung dargestellt.

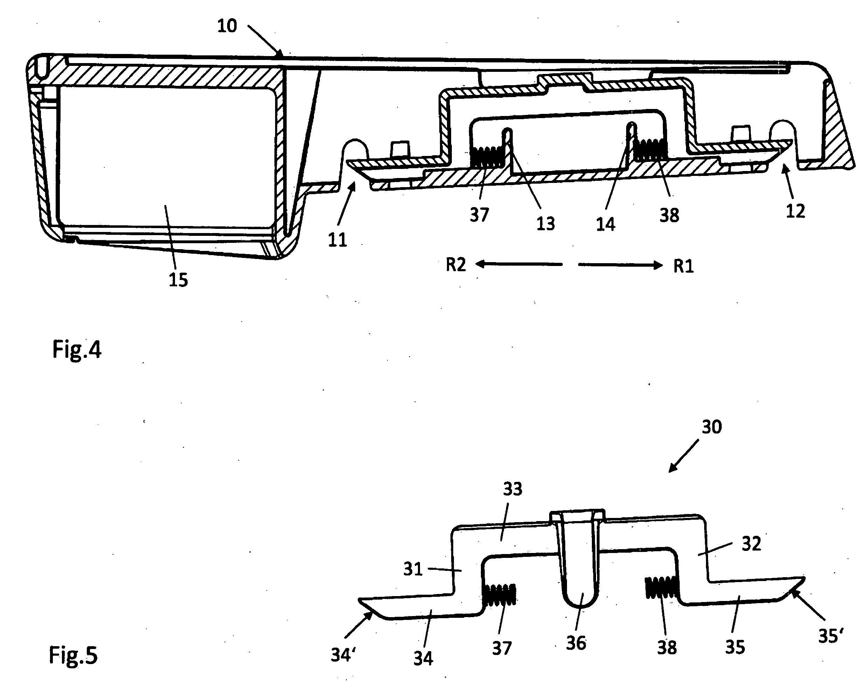

Figur 4 zeigt eine Halterung 10 im Querschnitt mit in der Halterung 10 vorgesehenem Schieber 30, wobei ein Betätigungselement 36 des Schiebers 30 nicht dargestellt ist. Figur 5 zeigt den in Figur 4 dargestellten Schieber 30 in Alleinstellung.

Der Schieber 30 umfasst einen ersten Verriegelungsarm 34 und einen diesem gegenüberliegend angeordneten zweiten Verriegelungsarm 35. Der erste Verriegelungsarm 34 ist mit einem ersten Abstützarm 31 des Schiebers verbunden. Der erste Abstützarm schließt mit dem ersten Verriegelungsarm einen Winkel von etwa 90° ein. Der zweite Verriegelungsarm 35 ist mit einem zweiten Abstüztarm 32 verbunden, und der zweite Verriegelungsarm und der zweite Abstützarm schließen miteinander einen Winkel von etwa 90° ein. Der Schieber 30 umfasst ferner einen Verbindungsarm 33, mittels dem der erste Abstützarm 31 mit dem zweiten Abstützarm 32 verbunden ist. Ferner umfasst der Schieber 30 das Betätigungselement 36, das mit dem Verbindungsarm 33 verbunden ist.

In der Verriegelungsstellung verriegelt der erste Verriegelungsarm 34 den ersten Befestigungsstift 11 in der ersten Haltenut 11, und der zweite Verriegelungsarm 35 verriegelt den zweiten Befestigungsstift 22 in der zweiten Haltenut 12. Somit kann in der Verriegelungsstellung der Korb 20 nicht aus der Halterung 10 bzw. aus den Halterungen 10 gelöst werden, so dass sich in dem Aufnahmeraum des Korbs 20 befindliche Kabel oder Steckdosenleisten nicht herausfallen können und diese vor Blicken geschützt sind.

Aus den Figuren 4 und 5 ist ersichtlich, dass das erfindungsgemäße Möbelzubehör 1 ferner eine erste Kraftspeichereinrichtung 37 in Form einer ersten Federeinrichtung 37 bzw. In Form einer ersten Feder 37 und eine zweite Kraftspeichereinrichtung 38 in Form einer zweiten Federeinrichtung 38 bzw. in Form einer zweiten Feder 38 umfasst. Aus Figur 5 ist ersichtlich, dass die erste Feder 37 mit dem ersten Abstützarm 31 und die zweite Feder 38 mit dem zweiten Abstützarm 32 des Schiebers 30 verbunden ist. Die erste Feder 37 und die zweite Feder 38 sind aber nicht notwendigerweise mit dem Schieber 30 verbunden, sondern diese können sich in alternativen Ausführungen lediglich an den Abstützarmen abstützen.

Aus Figur 4 ist ersichtlich, dass die Halterung 10 eine erste Abstützwand 13 und eine zweite Abstützwand 14 umfasst. Die erste Feder 37 ist zwischen dem ersten Abstützarm 31 des Schiebers 30 und der ersten Abstützwand 30 der Halterung 10 angeordnet, und die zweite Feder 38 ist zwischen dem zweiten Abstützarm 32 des Schiebers 30 und der zweiten Abstützwand 14 der Halterung 10 angeordnet. Das Betätigungselement 36 ist zwischen der ersten Abstützwand 13 und der zweiten Abstützwand 14 angeordnet.

Der Schieber 30 ist aus der Verriegelungsstellung mittels des Betätigungselements 36 in die erste Freigabestellung verschiebbar, indem der Schieber 30 in eine erste Richtung R1 verschoben wird. Die erste Richtung R1 ist dabei die Richtung in Richtung der zweiten Haltenut 12. In der ersten Freigabestellung verriegelt der zweite Verriegelungsarm 35 den zweiten Befestigungsstift 22 in der zweiten Haltenut 12, wobei der erste Verriegelungsarm 34 des Schiebers 30 so weit in Richtung der zweiten Haltenut 12 verschoben ist, dass der erste Verriegelungsarm 34 die erste Haltenut 11 nicht mehr verriegelt, so dass sich ein in der ersten Haltenut 11 befindlicher erster Befestigungsstift 21 herausschwenkbar ist. Somit ist der erste Befestigungsstift 21 nicht mehr in der ersten Haltenut 11 verriegelt, so dass der Korb 20 um eine durch die zweiten Befestigungsstifte 22 definierte zweite Schwenkachse verschwenkbar ist. In den Figuren 2a und 2b ist das erfindungsgemäße Möbelzubehör 1 in einem Zustand dargestellt, in dem der Korb 20 um die zweite Schwenkachse verschwenkt ist, so dass der Korb 20 zur Vorderseite des in Figur 7 dargestellten Tisches aufgeklappt ist. Somit lässt sich der Korb 20 von der Vorderseite des Tisches 100 aus beladen.

Der Schieber 30 ist ferner aus der Verriegelungsstellung in eine zweite Freigabestellung überführbar, indem der Schieber 30 in eine zweite Richtung R2 verschoben wird, die zu der ersten Richtung R1 entgegengesetzt ist. Die zweite Richtung R2 ist dabei die Richtung in Richtung der ersten Haltenut 11.

In der zweiten Freigabestellung verriegelt der erste Verriegelungsarm 34 des Schiebers 30 den ersten Befestigungsstift 21 in der ersten Haltenut 11, wobei der Schieber 30 so weit in Richtung der ersten Befestigungsnut 11 verschoben ist, dass der zweite Verriegelungsarm 35 des Schiebers 30 die zweite Haltenut 12 nicht mehr verschließt, so dass der zweite Befestigungsstift 22 aus der zweiten Haltenut 12 herausschwenkbar ist. Dabei ist der Korb 20 um eine durch den ersten Befestigungsstift 22 definierte erste Schwenkachse schwenkbar. Wenn der Korb 20 um die erste Verschwenkachse verschwenkt wird, dann ist der Korb 20 bei einer Befestigung des Möbelzubehörs 1 an dem in Figur 7 dargestellten Tisch 100 zur Rückseite des Tisches 100 hin aufklappbar, so dass der Aufnahmeraum des Möbelzubehörs 1 von der Rückseite des Tisches 100 aus zugänglich ist. Ein zur Rückseite eines Möbels 100 aufgeklapptes Möbelzubehör 1 ist in den Figuren 3a und 3b dargestellt.

Aus Figur 4 ist ersichtlich, dass in der Verriegelungsstellung des Schiebers 30 die erste Feder 37 auf den Schieber 30 die gleiche Kraft ausübt wie die zweite Feder 38 auf den Schieber 30. Daher verbleibt der Schieber 30 ohne eine externe Krafteinwirkung in der Verriegelungsstellung.

In der ersten Verriegelungsstellung, die erreicht werden würde, wenn der in Figur 4 dargestellte Schieber 30 nach rechts in Richtung der zweiten Haltenut 12 verschoben wird, ist die erste Feder 37 stärker komprimiert als die zweite Feder 38, da die erste Feder 37 von dem ersten Abstützarm 31 des Schiebers 30 auf die erste Abstützwand 13 hin zu bewegt wird. Folglich übt die erste Feder 37 in der Freigabestellung auf den Schieber 30 eine größere Kraft aus als die zweite Feder 38, so dass der Schieber 30 ohne externe Krafteinwirkung in die Verriegelungsstellung überführt wird. Die zweite Feder 38 steht in der ersten Verriegelungsstellung entweder nicht mehr mit der zweiten Abstützwand 14 in Kontakt oder aber übt eine verminderte Kraft in Richtung der Verriegelungsstellung auf den Schieber 30 aus.

Durch Verschieben des in Figur 4 dargestellten Schiebers 30 nach links in Richtung der ersten Haltenut 11 wird der Schieber 10 in die zweite Freigabestellung überführt. In der zweiten Freigabestellung wird die zweite Feder 38, die zwischen dem zweiten Abstützarm 32 und der zweiten Abstützwand 14 angeordnet ist, weiter komprimiert. Die erste Feder 37, die zwischen dem ersten Abstützarm 31 und der ersten Abstützwand 13 angeordnet ist, kann durch Verschieben des Schiebers 30 in Richtung der zweiten Freigabestellung von der ersten Abstützwand 12 entfernt werden, so dass die erste Feder 37 auf den Schieber 30 in der zweiten Freigabestellung keine Kraft ausübt oder aber eine verminderte Kraft. Folglich ist die von der zweiten Feder 38 auf den Schieber 30 ausgeübte Kraft größer als die von der ersten Feder 37 auf den Schieber 30 ausgeübte Kraft, so dass der Schieber 30 ohne externe Krafteinwirkung in die Verriegelungsstellung überführt wird.

Aus den Figuren 4 und 5 ist ersichtlich, dass der erste Verriegelungsarm 34 eine einer Öffnung der ersten Haltenut 11 zugewandte Seite 34' aufweist, die derart abgeschrägt ist, dass durch Einführen des ersten Befestigungsstiftes 21 in die erste Haltenut 11 der Schieber 30 von der Verriegelungsstellung in Richtung der ersten Freigabestellung verschoben wird. Auch der zweite Verriegelungsarm 35 weist eine einer Öffnung der zweiten Haltenut 12 zugewandte Seite 35' auf, die ebenfalls derart abgeschrägt ist, dass durch Einführen des zweiten Befestigungsstifts 22 in die zweite Haltenut 12 der Schieber 30 von der Verriegelungsstellung in Richtung der zweiten Freigabestellung verschoben wird.

Folglich ist es möglich, einen zu einer Seite hin aufgeschwenkten Korb 20 wieder in Schließstellung zurrück zu schwenken, so dass die entsprechenden Befestigungsstifte 21, 22 wieder in den entsprechenden Haltenuten 11, 12 aufgenommen werden, ohne dass der/die Schieber 30 zuvor manuell in die entsprechende Freigabestellung verschoben werden muss/müssen, da durch Hereindrücken der entsprechenden Befestigungsstifte 21, 22 iri die Haltenuten 11, 12 der Schieber 30 automatisch aufgrund der abgeschrägten Seiten 34', 35' des Schiebers 30 in die entsprechende Richtung gedrückt wird.

Es ist zu beachten, dass das erfindungsgemäße Möbelzubehör 1 nicht notwendigerweise zwei Halterungen 10 benötigt, sondern dass die oben beschriebene Funktionalität auch mit lediglich einer Halterung 10 erreicht werden kann.

### Bezugezeichenliste

- 1: Möbelzubehör
- 10: Halterung
- 11: erstes Halteelement / erste Haltenut
- 11': Öffnung der ersten Haltenut
- 12: zweites Halteelement / zweite Haltenut
- 12': Öffnung der zweiten Haltenut
- 13: erste Abstützwand
- 14: zweite Abstützwand
- 15: Klemmeinrichtung (der Halterung)
- 16: Führungskanal (für Schieber)
- 20: Korb / Kabelkorb / Deckel
- 21: erstes Befestigungselement / erster Befestigungsstift
- 22: zweites Befestigungselement / zweiter Befestigungsstift
- 30: Schieber
- 31: erster Abstützarm (des Schiebers)
- 32: zweiter Abstützarm (des Schiebers)
- 33: Verbindungsarm (des Schiebers)
- 34: erster Verriegelungsarm (des Schiebers)
- 34': Seite des ersten Verriegelungsarm
- 35: zweiter Verriegelungsarm (des Schiebers)
- 35': Seite des zweiten Verriegelungsarm
- 36: Betätigungselement (des Schiebers)
- 37: erste Kraftspeichereinrichtung / erste Federeinrichtung / erste Feder
- 38: zweite Kraftspeichereinrichtung / zweite Federeinrichtung / zweite Feder
- 100: Möbel
- 110: Tischbeinstruktur
- 120: Verbindungsstrebe
- 130: Tischplatte
- R1: erste Richtung
- R2: zweite Richtung

## Patentansprüche

1. Möbelzubehör (1) mit den folgenden Merkmalen:
- das Möbelzubehör (1) umfasst zumindest eine an einem Möbel (100) befestigbare Halterung (.10) mit einem ersten Halteelement (11) und einem zweiten Halteelement (12);
- das Möbelzubehör (1) umfasst einen Korb (20) mit einem ersten Befestigungselement (21) und einem zweiten Befestigungselement (22);
- der Korb (20) ist an der Halterung (10) dadurch befestigbar, dass das erste Befestigungselement (21) mittels des ersten Halteelements (11) und/oder das zweite Befestigungselement (22) mittels des zweiten Halteelements (12) gehalten ist;
- der Korb (20) ist um eine durch das erste Halteelement (11) definierte erste Schwenkachse und um eine durch das zweite Halteelement (12) definierte zweite Schwenkachse gegenüber der Halterung (10) verschwenkbar,
**gekennzeichnet durch** die folgenden Merkmale:
- das Möbelzubehör (1) umfasst einen an der Halterung (10) verschiebbar gelagerten Schieber (30) zum Verriegeln des ersten Befestigungselements (21) in/an dem ersten Halteelement (11) und des zweiten Befestigungselements (22) in/an dem zweiten Halteelement (12);
- in einer Verriegelungsstellung verriegelt der Schieber (30) das erste Befestigungselement (21) in/an dem ersten Halteelement (11) und das zweite Befestigungselement (22) in/an dem zweiten Halteelement (12);
- in einer ersten Freigabestellung verriegelt der Schieber (30) das zweite Befestigungselement (22) in/an dem zweiten Halteelement (12), wobei das erste Halteelement (11) entriegelt ist, so dass das erste Befestigungselement (21) von/aus dem ersten Halteelement (11) lösbar ist und der Korb (20) um die zweite Schwenkachse verschwenkbar ist;
- in einer zweiten Freigabestellung verriegelt der Schieber (30) das erste Befestigungselement (21) in/an dem ersten Halteelement (11), wobei das zweite Halteelement (12) entriegelt ist, so dass das zweite Befestigungselement (22) von/aus dem zweiten Halteelement (12) lösbar ist und der Korb (20) um die erste Schwenkachse verschwenkbar ist;
- der Schieber (30) ist aus der Verriegelungsstellung in die erste Freigabestellung **durch** Verschieben in eine erste Richtung (R1) überführbar; und
- der Schieber (30) ist aus der Verriegelungsstellung in die zweite Freigabestellung **durch** Verschieben in eine zweite Richtung (R2), die zu der ersten Richtung (R1) entgegengesetzt ist, überführbar.

2. Möbelzubehör nach Anspruch 1, **gekennzeichnet durch** die folgenden Merkmale:
- das Möbelzubehör (1) umfasst zwei Kraftspeichereinrichtungen (37, 38), die jeweils zwischen dem Schieber (30) und der Halterung (10) angeordnet sind;
- eine erste Kraftspeichereinrichtung (37) ist dazu ausgebildet, den Schieber (30) in die zweite Richtung (R1) mit einer Kraft zu beaufschlagen;
- eine zweite Kraftspeichereinrichtung (38) ist dazu ausgebildet, den Schieber (30) in die erste Richtung (R2) mit einer Kraft zu beaufschlagen;
- in der Verriegelungsstellung gleicht sich die von der ersten Kraftspeichereinrichtung (37) auf den Schieber (30) ausgeübte Kraft mit der von der zweiten Kraftspeichereinrichtung (38) auf den Schieber (30) ausgeübte Kraft aus, so dass ohne externe Krafteinwirkung der Schieber (30) in der Verriegelungsstellung verbleibt;
- in der ersten Freigabestellung übt die erste Kraftspeichereinrichtung (37) auf den Schieber (30) eine größere Kraft aus als die zweite Kraftspeichereinrichtung (38), so dass der Schieber (30) ohne externe Krafteinwirkung in die Verriegelungsstellung überführt wird; und
- in der zweiten Freigabestellung übt die zweite Kraftspeichereinrichtung (38) auf den Schieber (30) eine größere Kraft aus als die erste Kraftspeichereinrichtung (37), so dass der Schieber (30) ohne externe Krafteinwirkung in die Verriegelungsstellung überführt wird.

3. Möbelzubehör nach Anspruch 2, **gekennzeichnet durch** die folgenden Merkmale:
die Halterung (10) umfasst eine erste Abstützwand (13) und eine zweite Abstützwand (14);
- der Schieber (30) umfasst einen ersten Abstützarm (31) und einen zweiten Abstützarm (32);
- die erste Kraftspeichereinrichtung (37) ist zwischen der ersten Abstützwand (13) und dem ersten Abstützarm angeordnet und stützt sich an der ersten Abstützwand (13) ab und/oder ist mit dieser verbunden und stützt sich an dem ersten Abstützarm (31) ab und/oder ist mit diesem verbunden; und
- die zweite Kraftspeichereinrichtung (38) ist zwischen der zweiten Abstützwand (14) und dem zweiten Abstützarm (32) angeordnet und stützt sich an der zweiten Abstützwand (14) ab und/oder ist mit dieser verbunden und stützt sich an dem zweiten Abstützarm (32) ab und/oder ist mit diesem verbunden.

4. Möbelzubehör nach Anspruch 3, **gekennzeichnet durch** die folgenden Merkmale:
- der Schieber (30) umfasst einen Verbindungsarm (33), mittels dem der erste Abstützarm (31) mit dem zweiten Abstützarm (32) verbunden ist;
- der Schieber (30) umfasst ein Betätigungselement (36), das mit dem Verbindungsarm (33) verbunden ist und zwischen dem ersten (31) und zweiten (32) Abstützarm und zwischen der ersten (13) zweiten (14) Abstützwand angeordnet ist; und
- der Schieber (30) ist mittels des Betätigungselements (36) in die erste Richtung (R1) und in die zweite Richtung (R2) verschiebbar.

5. Möbelzubehör nach einem der vorhergehenden Ansprüche, **gekennzeichnet durch** die folgenden Merkmale:
- das erste Halteelement (11) und das zweite Halteelement (12) sind jeweils als Haltenut (11, 12) in der Halterung (10) ausgebildet;
- das erste Befestigungselement (21) und zweite Befestigungselement (22) sind jeweils als Befestigungsstift (21, 22) ausgebildet;
- der erste Befestigungsstift (21) ist in der ersten Haltenut (11) und der zweite Befestigungsstift (22) ist in der zweiten Haltenut (12) aufnehmbar;
- der Schieber (30) umfasst einen ersten Verriegelungsarm (34) und einen zweiten Verriegelungsarm (35);
- in der Verriegelungsstellung verriegelt der erste Verriegelungsarm (34) den ersten Befestigungsstift (21) in der ersten Haltenut (11) und der zweite Verriegelungsarm (35) verriegelt den zweiten Befestigungsstift (22) in der zweiten Haltenut (12);
- in der ersten Freigabestellung verriegelt der zweite Verriegelungsarm (35) den zweiten Befestigungsstift (22) in der zweiten Haltenut (12), wobei der erste Verriegelungsarm (34) den ersten Befestigungsstift (21) nicht in der ersten Haltenut (11) verriegelt, so dass der erste Befestigungsstift (21) aus der ersten Haltenut (11) entfernbar ist und der Korb (20) um die zweite Schwenkachse verschwenkbar ist; und
- in der zweiten Freigabestellung verriegelt der erste Verriegelungsarm (34) den ersten Befestigungsstift (21) in der ersten Haltenut (11), wobei der zweite Verriegelungsarm (35) den zweiten Befestigungsstift (22) nicht in der zweiten Haltenut (12) verriegelt, so dass der zweite Befestigungsstift (22) aus der zweiten Haltenut (12) entfernbar ist und der Korb (20) um die erste Schwenkachse verschwenkbar ist.

6. Möbelzubehör (1) nach Anspruch 5, **gekennzeichnet durch** die folgenden Merkmale:
- der erste Verriegelungsarm (34) weist eine einer Öffnung der ersten Haltenut (11) zugewandte Seite (34') auf, die derart abgeschrägt ist, dass **durch** Einführen des ersten Befestigungsstifts (21) in die erste Haltenut (11) der Schieber (30) von der Verriegelungsstellung in Richtung der ersten Freigabestellung verschoben wird; und
- der zweite Verriegelungsarm (35) weist eine einer Öffnung der zweiten Haltenut (12) zugewandte Seite (35') auf, die derart abgeschrägt ist, dass **durch** Einführen des zweiten Befestigungsstifts (22) in die zweite Haltenut (12) der Schieber (30) von der Verriegelungsstellung in Richtung der zweiten Freigabestellung verschoben wird.

7. Möbelzubehör (1) nach einem der vorhergehenden Ansprüche, **dadurch gekennzeichnet, dass** die Halterung (10) eine Klemmeinrichtung (15) umfasst, mittels der die Halterung (10) an einer zwei Tischbeinstrukturen (110) verbindende Verbindungsstrebe (120) eines Tisches (100) befestigbar ist.

8. Möbel (100) in der Form eines Tisches mit einer Tischplatte, **dadurch gekennzeichnet, dass** das Möbel ein Möbelzubehör (1) nach einem der vorhergehenden Ansprüche umfasst, wobei das Möbelzubehör (1) an der Tischplatte oder an einem Tischgestell befestigt ist.

9. Möbel (100) nach Anspruch 8, wobei das Möbel zumindest zwei zueinander beabstandeten Tischbeinstrukturen (110) umfasst, die mittels einer Verbindungsstrebe (120) miteinander verbunden sind, **dadurch gekennzeichnet, dass** das Möbelzubehör (1) ein Möbelzubehör (1) nach Anspruch 7 ist, das mittels der Klemmeinrichtung (15) an der Verbindungsstrebe (120) befestigt ist.

## Claims

1. Furniture accessory (1) having the following features:
- the furniture accessory (1) comprises at least one bracket (10) which can be fastened to a piece of furniture (100) and has a first retaining element (11) and a second retaining element (12);
- the furniture accessory (1) comprises a basket (20) having a first fastening element (21) and a second fastening element (22);
- the basket (20) can be fastened to the bracket (10) in that the first fastening element (21) is held by means of the first retaining element (11) and/or the second fastening element (22) is held by means of the second retaining element (12);
- the basket (20) can be swivelled relative to the bracket (10) about a first swivel axis which is defined by the first retaining element (11) and about a second swivel axis which is defined by the second retaining element (12),
**characterised by** the following features:
- the furniture accessory (1) comprises a slider (30), which is movably mounted on the bracket (10), for locking the first fastening element (21) in/on the first retaining element (11) and for locking the second fastening element (22) in/on the second retaining element (12);
- in a locking position, the slider (30) locks the first fastening element (21) in/on the first retaining element (11) and locks the second fastening element (22) in/on the second retaining element (12);
- in a first release position, the slider (30) locks the second fastening element (22) in/on the second retaining element (12), the first retaining element (11) being unlocked so that the first fastening element (21) can be released from/out of the first retaining element (11) and the basket (20) can be swivelled about the second swivel axis;
- in a second release position, the slider (30) locks the first fastening element (21) in/on the first retaining element (11), the second retaining element (12) being unlocked so that the second fastening element (22) can be released from/out of the second retaining element (12) and the basket (20) can be swivelled about the first swivel axis;
- the slider (30) can be moved out of the locking position into the first release position by moving in a first direction (R1); and
- the slider (30) can be moved out of the locking position into the second release position by moving in a second direction (R2) which is opposite the first direction (R1).

2. Furniture accessory according to claim 1, **characterised by** the following features:
- the furniture accessory (1) comprises two energy storage means (37, 38) which are respectively arranged between the slider (30) and the bracket (10);
- a first energy storage means (37) is designed to apply force to the slider (30) in the second direction (R1);
- a second energy storage means (38) is designed to apply force to the slider (30) in the first direction (R2);
- in the locking position, the force exerted on the slider (30) by the first energy storage means (37) balances out the force exerted on the slider (30) by the second energy storage means (38), and therefore, without the effect of an external force, the slider (30) remains in the locking position;
- in the first release position, the first energy storage means (37) exerts a greater force on the slider (30) than the second energy storage means (38), and therefore the slider (30) is moved into the locking position without the effect of an external force; and
- in the second release position, the second energy storage means (38) exerts a greater force on the slider (30) than the first energy storage means (37), and therefore the slider (30) is moved into the locking position without the effect of an external force.

3. Furniture accessory according to claim 2, **characterised by** the following features:
- the bracket (10) comprises a first supporting wall (13) and a second supporting wall (14);
- the slider (30) comprises a first supporting arm (31) and a second supporting arm (32);
- the first energy storage means (37) is arranged between the first supporting wall (13) and the first supporting arm (31) and is supported on the first supporting wall (13) and/or is connected thereto and is supported on the first supporting arm (31) and/or is connected thereto; and
- the second energy storage means (38) is arranged between the second supporting wall (14) and the second supporting arm (32) and is supported on the second supporting wall (14) and/or is connected thereto and is supported on the second supporting arm (32) and/or is connected thereto.

4. Furniture accessory according to claim 3, **characterised by** the following features:
- the slider (30) comprises a connecting arm (33) which connects the first supporting arm (31) to the second supporting arm (32);
- the slider (30) comprises an actuating element (36) which is connected to the connecting arm (33) and is arranged between the first supporting arm (31) and the second supporting arm (32), and between the first supporting wall (13) and the second supporting wall (14); and
- the slider (30) can be moved by means of the actuating element (36) in the first direction (R1) and in the second direction (R2).

5. Furniture accessory according to any of the preceding claims, **characterised by** the following features:
- the first retaining element (11) and the second retaining element (12) are each in the form of retaining grooves (11, 12) in the bracket (10);
- the first fastening element (21) and the second fastening element (22) are each in the form of fastening pins (21, 22);
- the first fastening pin (21) can be received in the first retaining groove (11), and the second fastening pin (22) can be received in the second retaining groove (12);
- the slider (30) comprises a first locking arm (34) and a second locking arm (35);
- in the locking position, the first locking arm (34) locks the first fastening pin (21) in the first retaining groove (11), and the second locking arm (35) locks the second fastening pin (22) in the second retaining groove (12);
- in the first release position, the second locking arm (35) locks the second fastening pin (22) in the second retaining groove (12), the first locking arm (34) not locking the first fastening pin (21) in the first retaining groove (11) so that the first fastening pin (21) can be removed from the first retaining groove (11) and the basket (20) can be swivelled about the second swivel axis; and
- in the second release position, the first locking arm (34) locks the first fastening pin (21) in the first retaining groove (11), the second locking arm (35) not locking the second fastening pin (22) in the second retaining groove (12) so that the second fastening pin (22) can be removed from the second retaining groove (12) and the basket (20) can be swivelled about the first swivel axis.

6. Furniture accessory (1) according to claim 5, **characterised by** the following features:
- the first locking arm (34) has a side (34') which faces an opening in the first retaining groove (11) and is bevelled such that by inserting the first fastening pin (21) into the first retaining groove (11), the slider (30) is moved out of the locking position towards the first release position; and
- the second locking arm (35) has a side (35') which faces an opening in the second retaining groove (12) and is bevelled such that by inserting the second fastening pin (22) into the second retaining groove (12), the slider (30) is moved out of the locking position towards the second release position.

7. Furniture accessory (1) according to any of the preceding claims, **characterised in that** the bracket (10) comprises a clamping means (15) by which the bracket (10) can be fastened to a cross member (120) of a table (100), which cross member connects two table leg structures (110).

8. Piece of furniture (100) in the form of a table, comprising a table top, **characterised in that** the piece of furniture comprises a furniture accessory (1) according to any of the preceding claims, the furniture accessory (1) being fastened to the table top or to a table frame.

9. Piece of furniture (100) according to claim 8, the piece of furniture comprising at least two table leg structures (110) which are at a distance from one another and are interconnected by means of a cross member (120), **characterised in that** the furniture accessory (1) is a furniture accessory (1) according to claim 7 which is fastened to the cross member (120) by the clamping means (15).

## Revendications

1. Accessoire de meuble (1) comportant les éléments techniques suivants :
- l'accessoire de meuble (1) inclut au moins une monture (10) à fixer sur un meuble (100) avec un premier élément de maintien (11) et un second élément de maintien (12) ;
- l'accessoire de meuble (1) inclut un panier (20) avec un premier élément de fixation (21) et un second élément de fixation (22) ;
- le panier (20) est susceptible d'être fixé sur la monture (10) du fait que le premier élément de fixation (21) est maintenu au moyen du premier élément de maintien (11) et/ou que le second élément de fixation (22) est maintenu au moyen du second élément de maintien (12) ;
- le panier (20) est capable de pivoter par rapport à la monture (10) autour d'un premier axe de pivotement défini par le premier élément de maintien (11) et autour d'un second axe de pivotement défini par le second élément de maintien (12),
**caractérisé par** les caractéristiques suivantes :
- l'accessoire de meuble (1) inclut un coulisseau (30) monté en coulissement sur la monture (10) pour verrouiller le premier élément de fixation (21) dans/sur le premier élément de maintien (11) et le second élément de fixation (22) dans/sur le second élément de maintien (12) ;
- dans une position de verrouillage, le coulisseau (30) verrouille le premier élément de fixation (21) dans/sur le premier élément de maintien (11) et le second élément de fixation (22) dans/sur le second élément de maintien (12) ;
- dans une première position de libération, le coulisseau (30) verrouille le second élément de fixation (22) dans/sur le second élément de maintien (12), et le premier élément de maintien (11) est déverrouillé, de sorte que le premier élément de fixation (21) est détachable depuis le premier élément de maintien (11) et le panier (20) est capable de pivoter autour du second axe de pivotement ;
- dans une seconde position de libération, le coulisseau (30) verrouille le premier élément de fixation (21) dans/sur le premier élément de maintien (11), et le second élément de maintien (12) est déverrouillé, de sorte que le second élément de fixation (22) est détachable depuis le second élément de maintien (12) et le panier (20) est capable de pivoter autour du premier axe de pivotement ;
- le coulisseau (30) peut être transféré de la position de verrouillage jusque dans la première position de libération par coulissement dans une première direction (R1) ; et
- le coulisseau (30) peut être transféré de la position de verrouillage jusque dans la seconde position de libération par coulissement dans une seconde direction (R2) qui est opposée à la première direction (R1).

2. Accessoire de meuble selon la revendication 1, **caractérisé par** les caractéristiques suivantes :
- l'accessoire de meuble (1) inclut deux systèmes d'accumulation de force (37, 38), qui sont respectivement agencés entre le coulisseau (30) et la monture (10) ;
- un premier système d'accumulation de force (37) est réalisé pour solliciter le coulisseau (30) avec une force dans la seconde direction (R1) ;
- un second système d'accumulation de force (38) est réalisé pour solliciter le coulisseau (30) avec une force dans la première direction (R2) ;
- dans la position de verrouillage, la force exercée sur le coulisseau (30) par le premier système d'accumulation de force (37) est égale à la force exercée sur le coulisseau (30) par le second système d'accumulation de force (38), de sorte que sans application d'une force externe le coulisseau (30) demeure dans la position de verrouillage ;
- dans la première position de libération, le premier système d'accumulation de force (37) exerce sur le coulisseau (30) une force plus élevée que le second système d'accumulation de force (38), de sorte que sans application d'une force externe le coulisseau (30) est transféré dans la position de verrouillage ; et
- dans la seconde position de libération, le second système d'accumulation de force (38) exerce sur le coulisseau (30) une force plus élevée que le premier système d'accumulation de force (37), de sorte que sans application d'une force externe le coulisseau (30) est transféré dans la position de verrouillage.

3. Accessoire de meuble selon la revendication 2, **caractérisé par** les caractéristiques suivantes :
- la monture (10) inclut une première paroi de soutien (13) et une seconde paroi de soutien (14) ;
- le coulisseau (30) inclut un premier bras de soutien (31) et un second bras de soutien (32) ;
- le premier système d'accumulation de force (37) est agencé entre la première paroi de soutien (13) et le premier bras de soutien (31) et est soutenu sur la première paroi de soutien (13) et/ou est relié à celle-ci, et est soutenu sur le premier bras de soutien (31) et/ou est relié à celui-ci ; et
- le second système d'accumulation de force (38) est agencé entre la seconde paroi de soutien (14) et le second bras de soutien (32) et est soutenu sur la seconde paroi de soutien (14) et/ou est relié à celle-ci, et est soutenu sur le second bras de soutien (32) et/ou est relié à celui-ci.

4. Accessoire de meuble selon la revendication 3, **caractérisé par** les caractéristiques suivantes :
- le coulisseau (30) inclut un bras de liaison (33), au moyen duquel le premier bras de soutien (31) est relié avec le second bras de soutien (32) ;
- le coulisseau (30) inclut un élément d'actionnement (36), qui est relié avec le bras de liaison (33) et qui est agencé entre le premier et le second bras de soutien (31, 32) et est agencé entre la première et la seconde paroi de soutien (13, 14) ; et
- le coulisseau (30) est capable de coulisser au moyen de l'élément d'actionnement (36) dans la première direction (R1) et dans la seconde direction (R2).

5. Accessoire de meuble selon l'une des revendications précédentes, **caractérisé par** les caractéristiques suivantes :
- le premier élément de maintien (11) et le second élément de maintien (12) sont respectivement réalisés sous forme de gorges de maintien (11, 12) dans la monture (10) ;
- le premier élément de fixation (21) et le second élément de fixation (22) sont respectivement réalisés sous forme de tiges de fixation (21, 22) ;
- la première tige de fixation (21) est susceptible d'être reçue dans la première gorge de maintien (11) et la seconde tige de fixation (22) est susceptible d'être reçue dans la seconde gorge de maintien (12) ;
- le coulisseau (30) inclut un premier bras de verrouillage (34) et un second bras de verrouillage (35) ;
- dans la position de verrouillage, le premier bras de verrouillage (34) verrouille la première tige de fixation (21) dans la première gorge de maintien (11) et le second bras de verrouillage (35) verrouille la seconde tige de fixation (22) dans la seconde gorge de maintien (12) ;
- dans la première position de libération, le second bras de verrouillage (35) verrouille la seconde tige de fixation (22) dans la seconde gorge de maintien (12), et le premier bras de verrouillage (34) ne verrouille par la première tige de fixation (21) dans la première gorge de maintien (11), de sorte que la première tige de fixation (21) est susceptible d'être éloignée hors de la première gorge de maintien (11) et le panier (20) peut être pivoté autour du second axe de pivotement ; et
- dans la seconde position de verrouillage, le premier bras de verrouillage (34) verrouille la première tige de fixation (21) dans la première gorge de maintien (11), et le second bras de verrouillage (35) ne verrouille pas la seconde tige de fixation (22) dans la seconde gorge de maintien (12), de sorte que la seconde tige de fixation (22) est susceptible d'être éloignée hors de la seconde gorge de maintien (12) et le panier (20) peut être pivoté autour du premier axe de pivotement.

6. Accessoire de meuble (1) selon la revendication 5, **caractérisé par** les caractéristiques suivantes :
- le premier bras de verrouillage (34) comporte un côté (34') tourné vers une ouverture de la première gorge de maintien (11), côté qui est chanfreiné de telle manière qu'en introduisant la première tige de fixation (21) dans la première gorge de maintien (11) le coulisseau (30) est coulissé depuis la position de verrouillage en direction de la première position de libération ; et
- le second bras de verrouillage comporte un côté (35') tourné vers une ouverture de la seconde gorge de maintien (12), côté qui est chanfreiné de telle manière qu'en introduisant la seconde tige de fixation (22) dans la seconde gorge de maintien (12) le coulisseau (30) est coulissé depuis la position de verrouillage en direction de la seconde position de libération.

7. Accessoire de meuble (1) selon l'une des revendications précédentes, **caractérisé en ce que** la monture (10) inclut un dispositif de serrage (15), au moyen duquel la monture (10) est susceptible d'être fixée à une entretoise de liaison (120) d'une table (100) qui relie deux structures formant pied de table (110).

8. Meuble (100) sous la forme d'une table avec un plateau de table, **caractérisé en ce que** le meuble inclut un accessoire de meuble (1) selon l'une des revendications précédentes, dans lequel l'accessoire de meuble (1) est fixé sur le plateau de table ou sur un bâti de table.

9. Meuble (100) selon la revendication 8, dans lequel le meuble inclut au moins deux structures formant pied de table (110) à distance l'une de l'autre, qui sont reliées l'une à l'autre au moyen d'une entretoise de liaison (120), **caractérisé en ce que** l'accessoire de meuble (1) est un accessoire de meuble (1) selon la revendication 7, qui est fixé sur l'entretoise de liaison (120) au moyen du dispositif de serrage (15).
